(19) Europäisches Patentamt
European Patent Office
Office européen des brevets

(11) **EP 4 173 741 A1**

(12) **EUROPÄISCHE PATENTANMELDUNG**

(43) Veröffentlichungstag:
**03.05.2023 Patentblatt 2023/18**

(21) Anmeldenummer: **21205186.6**

(22) Anmeldetag: **28.10.2021**

(51) Internationale Patentklassifikation (IPC):
**B22F 10/28** (2021.01)   **B22F 10/38** (2021.01)
**B22F 12/90** (2021.01)   **B23K 26/03** (2006.01)
**B23K 26/342** (2014.01)   **B33Y 10/00** (2015.01)
**B33Y 30/00** (2015.01)   **B33Y 50/02** (2015.01)
**B22F 10/80** (2021.01)   **G01N 21/01** (2006.01)

(52) Gemeinsame Patentklassifikation (CPC):
**B22F 10/28; B22F 10/38; B22F 10/80; B22F 12/90;
B23K 26/0006; B23K 26/032; B23K 26/082;
B23K 26/342; B23K 31/125; B33Y 10/00;
B33Y 30/00; B33Y 50/02; G01B 11/30;
G01N 21/4788;** G01N 2021/479

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Fraunhofer-Gesellschaft zur
Förderung
der angewandten Forschung e.V.
80686 München (DE)**

(72) Erfinder:
• **CIKALOVA, Ulana
  01277 Dresden (DE)**

• **STÜWE, Tobias
  01277 Dresden (DE)**
• **BENDJUS, Beatrice
  01277 Dresden (DE)**
• **KRELL, Thomas
  85435 Erding (DE)**
• **PETROLL, Christoph
  85630 Grasbrunn (DE)**

(74) Vertreter: **Gagel, Roland
  Patentanwalt Dr. Roland Gagel
  Landsberger Strasse 480a
  81241 München (DE)**

(54) **VERFAHREN UND VORRICHTUNG ZUR ÜBERWACHUNG EINES
LASERBEARBEITUNGSPROZESSES DURCH SPECKLE-PHOTOMETRIE**

(57)    Die Erfindung betrifft ein Verfahren und eine Vorrichtung zur Überwachung eines Laserbearbeitungsprozesses, bei dem wenigstens ein Bearbeitungslaserstrahl entlang einer oder mehrerer Bahnen über eine zu bearbeitende Oberfläche geführt wird, um die Oberfläche jeweils lokal aufzuschmelzen. Bei dem Verfahren wird während des Bearbeitungsprozesses von der Oberfläche reflektierte und/oder gestreute Strahlung des Bearbeitungslaserstrahls oder eines Beleuchtungslasers (7) mit einer Hochgeschwindigkeits-Kamera (2) orts- und zeitaufgelöst erfasst und aus den Bildern mittels statischer und zeitaufgelöster Speckle-Photometrie automatisiert wenigstens die Topografie oder Rauheit der Oberfläche in einem oder mehreren interessierenden Abschnitten, die Größe des jeweiligen Schmelzbades (14) und die Porosität an oder unterhalb der Oberfläche in jeweils interessierenden Abschnitten als Zustandsgrößen bestimmt. Damit werden Zustandsgrößen der bearbeiteten Oberfläche mit hoher Ortsauflösung in Echtzeit ermittelt, die auch für eine Regelung des Bearbeitungsprozesses eingesetzt werden können.

Fig. 4

**Beschreibung**

**Technisches Anwendungsgebiet**

Die vorliegende Erfindung betrifft ein Verfahren sowie eine Vorrichtung zur Überwachung eines Laserbearbeitungsprozesses, insbesondere zur pulverbettbasierten additiven Fertigung, bei dem wenigstens ein Bearbeitungslaserstrahl entlang einer oder mehrerer Bahnen über eine zu bearbeitende Oberfläche geführt wird, um die Oberfläche jeweils lokal unter Bildung eines Schmelzbades aufzuschmelzen.

Die additive oder generative Fertigung ermöglicht eine zeit- und resourcen-effiziente Herstellung von Bauteilen mit nahezu unbegrenzter gestalterischer und konstruktiver Freiheit. Sie wird aufgrund ihrer Vorzüge in der funktionsgerechten Fertigung besonders geschätzt und vorangetrieben. Insbesondere im Bereich der Fertigung von Werkzeugeinsätzen, der Luft- und Raumfahrt, der Medizintechnik sowie im Leichtbau und allgemein im Prototyping liefert sie ein hohes Innovations- und Anwendungspotential, beispielsweise bei der Fertigung von konturnah gekühlten Turbinenschaufeln oder individualisierten medizinischen Implantaten.

Trotz kontinuierlicher Weiterentwicklung der Fertigungsprozesse müssen diese zur Qualitätssicherung geeignet überwacht werden. Fehlerhaft eingestellte Prozessparameter oder Schwankungen der Prozessbedingungen können die resultierenden mechanischtechnologischen Bauteileigenschaften verschlechtern oder zum Prozessabbruch führen. Eine nachträgliche Fehlerbearbeitung am Bauteil ist nur teilweise möglich und hebt den Vorteil der additiven Fertigung wieder auf. Somit besteht ein deutlicher Bedarf an Lösungen zur Anlagen-integrierten Prozessüberwachung, die es ermöglichen, Defekte bereits im Moment der Defektentstehung zu detektieren und den Aufbau des Bauteils zu stoppen, um Material, Zeit und Kosten zu sparen, die für den weiteren Aufbau und die Prozessierung anfallen würden. Alternativ kann die Erkennung von Anomalien auch genutzt werden, um den Fertigungsprozess zu steuern und eine parametrische Regelung durchzuführen, ohne den Prozess abbrechen zu müssen.

Pulverbettbasierte additive Fertigungsprozesse wie Selektive Laser Melting (SLM) und Laser Powder Bed Fusion of Metals (LPBF-M) stellen eine neue Klasse von Herstellungsverfahren mit einer Reihe von Vorteilen gegenüber konventionellen Fertigungsverfahren dar. So lassen sich mit diesen Verfahren beispielsweise filigrane Metallbauteile mit großer Gewichtsersparnis herstellen, die mit üblichen Guss-, Schmiede- und Fräsprozessen nicht herstellbar sind. Von besonderem industriellen Interesse sind diese Verfahren nicht zuletzt deshalb, da hiermit auch eine geringe Anzahl an Ersatzteilen vergleichsweise schnell und wirtschaftlich hergestellt werden kann.

Allerdings führen die pulverbettbasierten Verfahren wie das SLM oder das LPBF-M nur bei der Wahl optimaler Prozessparameter auch zu einer hohen Fertigungsqualität bei den produzierten Komponenten und einer geringen Zahl an Ausschussteilen. Vielfach sind die optimalen Prozessabläufe aber unbekannt und es fehlen einfache zerstörungsfreie Prüfverfahren, mit denen die beim Prozess erzeugten Bauteile unkompliziert im gesamten Umfang geprüft werden können. Es gibt bis zu 50 bekannte Prozesseinflussfaktoren, die einen in den meisten Fällen noch unbekannten Einfluss auf die Prozessqualität haben und zu Fehlern führen können. Diese sind z.B. Bindefehler, Materialunreinheiten, schlechte Oberflächenqualitäten, Porosität oder auch eine mangelnde Prozesskontinuität insgesamt. Es fehlt bisher an Möglichkeiten, mit einer hohen Auflösung den Prozess direkt am Ursprung bei der Material-, Laser- und Schmelze-Interaktion in Echtzeit zu beurteilen. Nur so können Prozess- und Materialparameter unabhängig dahingehend beurteilt werden, inwieweit der Prozess ein fehlerfreies Bauteil produziert, ohne es anschließend aufwändig prüfen zu müssen.

**Stand der Technik**

Vor dem Hintergrund der steigenden Nachfrage nach geeigneten Monitoring-Lösungen und Produktdokumentationen wurden in den letzten Jahren verschiedene Ansätze verfolgt. So existiert ein Verfahren zur Ermittlung der Schmelzbadabmessungen, ähnlich wie es bereits im Bereich des Laserschweißens eingesetzt wird. Hierbei wird ein Strahlteiler genutzt, um die emittierte Strahlung des Schmelzbades durch eine Photodiode zu erfassen und anhand der Grauwerte des digitalen Histogramms auszuwerten. Anhand der Strahlungsintensität und unter Verwendung einer weiteren CMOS-Kamera kann die Ausprägung des Schmelzbades erfasst und daraufhin bewertet werden.

Die US 2009/0206065 A1 beschreibt ein Verfahren zur koaxialen Überwachung des Schmelzbades mit Hilfe einer hochauflösenden Kamera und einer Photodiode. Eine Weiterentwicklung unter Nutzung eines thermographischen Detektors in diesem System wird in der EP 2598313 B1 beschrieben. Hier wird die Intensität der Schmelzbadstrahlung durch einen Mapping-Algorithmus als eine Funktion der Laserstrahlposition in x- und y-Koordinaten dargestellt. Diese Vorgehensweise ermöglicht es, ein zusammengesetztes Bild der Schmelzbadtemperatur zu erstellen, welches den Eindruck einer Bildaufnahme erzeugt. Dunkle Stellen in den Aufnahmen werden hierbei als Anzeichen für einen abweichenden Prozesswärmestrom gedeutet und können somit lokale Bauteilüberhöhungen aufgrund von Eigenspannungen und Wärmestauungen bei Überhang-Geometrien signalisieren.

Auch Infrarot-Pyrometer oder die Technik der Thermographie wie bspw. in der DE 102014212246 B3 werden eingesetzt, um die räumliche und zeitliche Entwicklung der Wärmeeinflusszone im Strahlschmelzprozess zu untersuchen.

Die EP 1693141 B1 offenbart eine Anordnung zur ortsaufgelösten Temperaturmessung bei einem Laserbearbeitungsverfahren, bei der ein optischer Detektor koaxial zum Bearbeitungslaserstrahl mit einem die Wellenlänge des Bearbeitungslaserstrahls sperrenden optischen Filter angeordnet ist, um vom Bearbeitungsbereich ausgehende Wärmestrahlung zur Bestimmung der Temperatur zu erfassen.

In der US 9527240 B2 wird die Austrittsgeschwindigkeit eines Aufbaumaterials aus einer Extrusionsdüse beim 3D-Druck mittels Laser-Speckle-Photometrie überwacht. Die US 2020110025 A1 nutzt eine Kombination unterschiedlicher Verfahren, u.a. auch der Laser-Speckle-Photometrie, mit mehreren Lichtquellen, um den Bearbeitungsprozess zu überwachen. Mit der Laser-Speckle-Photometrie werden dabei Mikrohohlräume und nicht verschmolzenes Metall detektiert. Nähere Angaben zur Auswertung werden allerdings nicht gemacht.

Bisherige Qualitätssicherungsansätze wie Überwachung des Schmelzbades, Überwachung des Bauprozesses durch Thermographie oder bildgestützte Verfahren sind nicht zur Kontrolle der Hochgeschwindigkeitsprozesse auf engstem Raum geeignet. Alle beschriebenen Ansätze beschränken sich auf die Überwachung einzelner Prozessmerkmale oder Fehler während der Fertigung oder nutzen eine Kombination mehrerer Verfahren. Die hohen anfallenden Datenmengen stellen bei den Ansätzen zur Thermographie und zur bildgestützten Überwachung ein weiteres Problemfeld dar, da eine Echtzeitauswertung der Messdaten nicht möglich ist und für die Produktdokumentation im industriellen Umfeld erhebliche Speicherkapazitäten geschaffen werden müssten. Beispielsweise müssen in der Luft- und Raumfahrt über einen Zeitraum von bis zu 5 Jahren alle qualitätsrelevanten Daten nachgehalten werden. IR-Thermometer eignen sich für Ableitungen von Prozessparametern, wie z.B. der Pulverschichthöhe. Jedoch sind aufgrund der hohen Rauscheinflüsse während des Prozesses keine konkreten Aussagen zur tatsächlichen Temperatur möglich. Zudem ist nur eine geringe Aufnahmerate von 50 ms (20Hz) für einen kleinen Betrachtungsbereich von 500 $\mu m^2$ erreichbar.

Die bisherigen Methoden beurteilen entweder die Bauteilschicht im Ganzen und sind für den einzelnen Laserpunkt (ca. 30-80 $\mu m$) sowohl zu grob als auch zu träge. Die Verfahren, die sich auf den Bereich des Schmelzbades konzentrieren, haben vor allem das Resultat und die Ausdehnung der Schmelze im Fokus, bieten jedoch aufgrund der Datenmengen nicht die Möglichkeit einer Echtzeitevaluierung oder eine passende Detailauflösung auf den einzelnen Laserpunkt. Vor allem eine thermische Detailauflösung (feine Topologie) des Schmelzbades ist bei keinem Verfahren gegenwärtig vorhanden.

Die Aufgabe der vorliegenden Erfindung besteht darin, ein Verfahren und eine Vorrichtung zur Überwachung eines Laserbearbeitungsprozesses, insbesondere zur pulverbettbasierten additiven Fertigung, anzugeben, die eine Inline-Überwachung des Fertigungsprozesses in Echtzeit mit hoher Detailauflösung ermöglicht.

## Darstellung der Erfindung

Die Aufgabe wird mit dem Verfahren und der Vorrichtung gemäß den Patentansprüchen 1 und 13 gelöst. Vorteilhafte Ausgestaltungen des Verfahrens sowie der Vorrichtung sind Gegenstand der abhängigen Patentansprüche oder lassen sich der nachfolgenden Beschreibung sowie den Ausführungsbeispielen entnehmen.

Mit dem Verfahren wird ein Laserbearbeitungsprozess überwacht, bei dem wenigstens ein Bearbeitungslaserstrahl entlang einer oder mehrerer Bahnen über eine zu bearbeitende Oberfläche geführt wird, um die Oberfläche jeweils lokal unter Bildung eines Schmelzbades aufzuschmelzen. Hierbei kann es sich beispielsweise um einen Schweißprozess, einen Glättungsprozess oder - in der bevorzugten Anwendung - um einen pulverbettbasierten additiven Fertigungsprozess handeln, bei dem jeweils eine Pulverschicht entsprechend der Querschnittsfläche des herzustellenden Bauteils aufgeschmolzen und das Bauteil auf diese Weise Schicht für Schicht aufgebaut wird.

Bei dem vorgeschlagenen Verfahren wird während des Bearbeitungsprozesses von der Oberfläche reflektierte und/oder gestreute Laserstrahlung des Bearbeitungslaserstrahls mit einer zeitlich und örtlich hochauflösenden Kamera orts- und zeitaufgelöst erfasst, um für Laser-Speckle-Photometrie geeignete zeit- und ortsaufgelöste Bilder zu erhalten. In einer alternativen Ausgestaltung wird ein zusätzlicher Laser zur Beleuchtung der Oberfläche eingesetzt, dessen von der Oberfläche reflektierte und/oder gestreute Laserstrahlung dann mit der Kamera orts- und zeitaufgelöst erfasst wird, um die für Laser-Speckle-Photometrie geeigneten zeit- und ortsaufgelösten Bilder zu erhalten. Vor der Kamera wird dabei vorzugsweise jeweils ein geeignetes optisches Filter eingesetzt, das nur die jeweilige Laserstrahlung passieren lässt, also eine entsprechend geringe Durchlassbandbreite aufweist. Bei der Kamera kann es sich beispielsweise um eine CMOS- oder CCD-Kamera handeln, der vorzugsweise eine Linse oder ein Objektiv zur Abbildung der bearbeiteten Oberfläche vorgeschaltet ist. Die Kamera ermöglicht dabei vorzugsweise Aufnahmefrequenzen bis 32 kHz. Bei dem vorgeschlagenen Verfahren werden während des Bearbeitungsprozesses aus den mit der Kamera erfassten Bildern mittels Auswerteverfahren bzw. Algorithmen der statischen und der zeitaufgelösten Laser-Speckle-Photometrie automatisiert mehrere Zustandsgrößen des jeweils gerade bearbeiteten Oberflächenbereiches bestimmt und geeignet dargestellt, mit Sollgrößen verglichen oder auch zur Regelung des Bearbeitungsprozesses genutzt. Bei den Zustandsgrößen handelt es sich wenigstens um die Topografie oder Rauheit der Oberfläche in einem oder mehreren Abschnitten im Bereich des Auftreffortes des Bearbeitungslaserstrahls auf der Oberfläche, um die Größe des jeweiligen Schmelzbades und um die Porosität an oder unterhalb der Oberfläche in einem oder mehreren Abschnitten im Bereich des Auftreffortes des Bearbeitungslaserstrahls auf der Oberfläche. Die Erfassung der reflektierten und/oder gestreuten Strahlung mit der Kamera erfolgt dabei in der bevorzugten Ausgestaltung koaxial zum Bearbeitungslaserstrahl.

Bei dem vorgeschlagenen Verfahren und der zugehörigen Vorrichtung wird somit ein Laser-Speckle-Photometrie-Verfahren zur Prozessüberwachung eingesetzt. Dieses optische Verfahren nutzt die beim Bearbeitungs- oder Herstellungsprozess erzeugte thermische Wärme, um bei fehlerhaft ablaufenden Schmelz- oder Sinterprozessen aus der Veränderung des Interferenzmusters aufgrund der Oberflächenrauheit und des Wärmetransports auf die Erzeugung von Werkstofffehlern zu schließen, um dann gegebenenfalls den Prozess abzubrechen oder auch auf Basis der ermittelten Zustandsgrößen zu regeln. Die Aufnahme der Bilddaten für die Laser-Speckle-Photometrie erfolgt jeweils während des Bearbeitungsprozesses. Das durch die Reflexion und/oder Streuung der Laserstrahlung - entweder des Bearbeitungslasers oder eines zusätzlichen Beleuchtungslasers - erzeugte Speckle-Muster wird mit der Kamera aufgezeichnet und mit geeigneten Computer-Algorithmen ausgewertet. Hierbei können beispielsweise auch Korrelationen zwischen den aus dem Speckle-Muster statistisch ermittelten Größen und Prozessparametern wie Laserleistung, Lasergeschwindigkeit und/oder Prozessenergiedichte sowie bei pulverbettbasierten Fertigungsprozessen gegebenenfalls auch eine Kontaminierung des Pulvers detektiert werden.

Bei vielen Laserbearbeitungsprozessen wird der Bearbeitungslaserstrahl mittels eines oder mehrerer Scannerspiegel, beispielsweise eines Galvanometer-Scanners, über die zu bearbeitende Oberfläche geführt. Die Erfassung der reflektierten und/oder gestreuten Strahlung mit der Kamera erfolgt dann vorzugsweise ebenfalls über diese Scannerspiegel koaxial zum Bearbeitungslaserstrahl. Damit ist der Auftreffort des Bearbeitungslaserstrahls auf der Oberfläche in den mit der Kamera erfassten Bildern jeweils an der gleichen Stelle im Bild, so dass auch die für die Auswertung gewählten Abschnitte der zeitlich aufeinanderfolgenden Bilder jeweils an der gleichen Position in den Bildern liegen.

Prinzipiell ist auch eine Erfassung der reflektierten und/oder rückgestreuten Strahlung unabhängig von der momentanen Position des Bearbeitungslaserstrahls, also nicht koaxial zu diesem, möglich. Der Auftreffort des Bearbeitungslaserstrahls auf die Oberfläche muss dann in den einzelnen Bildern detektiert werden, da seine Position in den Bildern von Bild zu Bild variiert. Vorzugsweise wird hierzu ein Algorithmus zum Laserstrahl-Tracking eingesetzt, der den Auftreffort des Bearbeitungslaserstrahls in den Bildern anhand des Vorhandenseins der Speckle-Dynamik im Speckle-Muster erkennt und auch die nur geringe Positionsveränderung von Bild zu Bild berücksichtigt. Der verwendete Filter liefert dabei eine Liste von möglichen Positionen, aus denen mit Hilfe von aus den Prozessparametern abgeleiteten Informationen die besten Übereinstimmungen für jedes aufgenommene Bild ausgewählt werden. Diese Positionen können anschließend zu einem Pfad zusammengefasst werden, der entsprechend geglättet wird, um die jeweiligen Scanlinien zu bestimmen. Relativ zur jeweils momentanen Position des Laserstrahls in den Bildern werden dann die Abschnitte für die Auswertung, also die Bestimmung der Topografie oder Rauheit, die Größe des Schmelzbades und die Porosität sowie gegebenenfalls weitere Zustandsgrößen, gewählt. Dabei kann, je nach Methode, die Auswertung jeder dieser Abschnitte stattfinden, während sich die Wärmezone bzw. der Laserstrahl gerade durch diese hindurchbewegt oder nach dem er sie bereits durchquert hat. Dies gilt auch für die Wahl der auszuwertenden Abschnitte bei der koaxialen Beleuchtung. Bei beiden Alternativen kann jeweils auch ein zusammengesetztes Bild der Wärmezoneneigenschaften der gesamten bearbeiten Fläche erstellt werden.

Bei dem vorgeschlagenen Verfahren werden für die Auswertung der erfassten Bilder sowohl Algorithmen der statischen Laser-Speckle-Photometrie als auch Algorithmen der zeitaufgelösten Laser-Speckle-Photometrie eingesetzt. So wird die Topografie oder Rauheit der Oberfläche in dem jeweils ausgewerteten Abschnitt durch eine statische Analyse, also eine Analyse jeweils innerhalb eines einzelnen Bildes bestimmt. Hierzu wird die Grauwertverteilung des Bildes ausgewertet, um aus dieser Grauwertverteilung auf die Topografie zu schließen. Die Größe des Schmelzbades wird über eine dynamische Analyse ermittelt. Hierbei werden die von der mittels der Speckle-Muster erkennbaren Wärmeausdehnung des jeweils betrachteten Abschnittes beeinflussten Pixel gezählt, da deren Anzahl mit der Größe der Wärmezone und somit der Größe des Schmelzbades korrelieren. Für die Bestimmung der Porosität an oder unterhalb der Oberfläche in dem jeweils betrachteten Abschnitt wird eine dynamische Analyse mittels der Differenz-Korrelationsfunktion (DKF) durchgeführt. Aus dieser Differenz-Korrelationsfunktion lassen sich auch eventuelle Inhomogenitäten an oder unter der Oberfläche erkennen. Einzelheiten zu diesen Auswertealgorithmen können den nachfolgenden Ausführungsbeispielen entnommen werden.

Die für das Verfahren eingesetzte Vorrichtung weist entsprechend eine hochauflösende Hochgeschwindigkeits-Kamera auf, vorzugsweise mit optischem Filter und Linse oder Objektiv, die so in der Bearbeitungseinrichtung für den Laserbearbeitungsprozess integriert ist, dass sie von der Oberfläche reflektierte und/oder gestreute Strahlung koaxial zum Bearbeitungslaserstrahl orts- und zeitaufgelöst erfasst, um für Speckle-Photometrie geeignete zeit- und ortsaufgelöste Bilder aufzuzeichnen. Vorzugsweise wird hierzu eine Kamera eingesetzt, die Bilder mit einer Frame-Rate von >2000 Frames/s aufzeichnen kann, besonders bevorzugt eine Kamera, die Aufnahmefrequenzen bis 32kHz ermöglicht. Die Kamera ist bei der vorgeschlagenen Vorrichtung mit einer Auswerteeinrichtung verbunden, die aus den Bildern mittels Auswerteverfahren der statischen und zeitaufgelösten Laser-Speckle-Photometrie automatisiert wenigstens die Topografie oder Rauheit der Oberfläche in einem oder mehreren Abschnitten im Bereich des Auftreffortes des Bearbeitungslaserstrahls auf der Oberfläche, die Größe des jeweiligen Schmelzbades und die Porosität an oder unterhalb der Oberfläche in einem oder mehreren Abschnitten im Bereich des Auftreffortes des Bearbeitungslaserstrahls auf der Oberfläche als Zustandsgrößen bestimmt und bereitstellt. Vorzugsweise ist die Auswerteeinrichtung direkt bei der Kamera angeordnet und weist wenigstens ein GPU-Modul auf. Die ermittelten Zustandsgrößen können dabei in unterschiedlicher Weise bereitgestellt werden, beispielsweise in Form eines oder mehrerer Bilder oder als Parameterliste. Es besteht auch die Möglichkeit eines Vergleichs der ermittelten Zustandsgrößen mit Sollgrößen, wobei dann bei einer einen Schwellwert übersteigenden Abweichung der jeweiligen Zustandsgröße von der Sollgröße ein Signal abgegeben werden kann. Eine Übereinstimmung oder Abweichung kann beispielsweise auch in Form einer Ampeldarstellung visualisiert werden.

Das vorgeschlagene Verfahren und die zugehörige Vorrichtung ermöglichen die Inline-Überwachung eines Laserbearbeitungsprozesses bzw. der damit bearbeiteten Oberfläche anhand mehrerer unterschiedlichen Merkmale. Das Verfahren und die Vorrichtung bieten eine hohe Ortsauflösung sowie eine höhere Aufnahmegeschwindigkeit als bei konventionellen Verfahren und ermöglichen auch eine Regelung des Bearbeitungsprozesses auf Basis der ermittelten Zustandsgrößen.

**Kurze Beschreibung der Zeichnungen**

Das vorgeschlagene Verfahren und die zugehörige Vorrichtung werden nachfolgend anhand von Ausführungsbeispielen in Verbindung mit den Zeichnungen nochmals näher erläutert. Hierbei zeigen:

Fig. 1    einen Überblick über beim vorgeschlagenen Verfahren zur Bestimmung unterschiedlicher Zustandsgrößen eingesetzte Algorithmen;

Fig. 2    eine schematische Darstellung des Einsatzes der vorgeschlagenen Vorrichtung in der Bearbeitungseinrichtung einer Laserbearbeitungs-Anlage;

Fig. 3    ein Beispiel für den Aufbau und die Anbindung der vorgeschlagenen Vorrichtung an eine Laserbearbeitungs-Anlage; und

Fig. 4    eine beispielhafte Darstellung einer Wahl der Abschnitte für die Auswertung innerhalb eines mit der Kamera aufgezeichneten Bildes.

**Wege zur Ausführung der Erfindung**

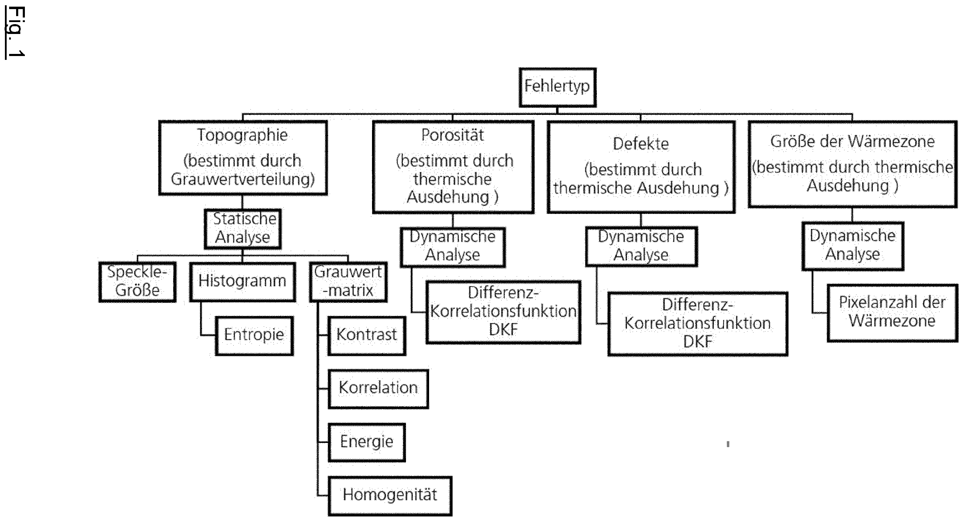

Das vorgeschlagene Verfahren und die zugehörige Vorrichtung werden nachfolgend anhand der Anwendung der Überwachung eines pulverbettbasierten additiven Fertigungsprozesses nochmals näher erläutert. Die hierbei mit der Kamera aufgezeichneten Speckle-Bilder werden bei dem Verfahren und der Vorrichtung sowohl statisch als auch dynamisch ausgewertet. Die dynamische Auswertung bietet dabei die Möglichkeit zur Bewertung der Größe der Wärmezone bzw. des Schmelzbades, offener Kavitäten, der Porosität und auch einer Kontaminierung des für den Aufbau des Bauteils eingesetzten Pulvers. Zur Bewertung des jeweiligen Zustandes dienen Algorithmen, die die thermische Anregung nach einem selektiven Aufschmelzen des Pulvers bewerten. Dies betrifft die Fläche der Wärmezone bzw. des Schmelzbades und auch bei Bedarf die Abkühldynamik in der Nähe des Aufschmelzbereiches. Figur 1 gibt hierbei beispielhaft einen Überblick über einige der bei dem vorgeschlagenen Verfahren einsetzbaren Algorithmen.

Die quantitative Analyse der Bauteiloberfläche beruht auf der Auswertung der Granulation der Speckle-Muster in den aufgenommenen Bildern. Im Fall der additiven Fertigung ist die Topographie-Charakterisierung beginnend vom Pulverzustand über die frisch hergestellte Lage und bis zur Rauheit des Fertigteils von Interesse. So stellen beispielsweise beim LPBF-M die kurze Wechselwirkungszeit zwischen Laser und Metallpulver und die geringe Viskosität der metallischen Schmelze hohe Ansprüche an die Prozessführung und führen häufig zur Ausprägung von sogenannten "Balling"-Phänomenen, bei welchen das Schmelzbad in mehrere kugelförmige Schmelzperlen zerfällt. Dies führt zu einer unerwünschten Oberflächentopographie, die den weiteren Herstellungsprozess beeinflusst.

Die Laser-Speckle-Photometrie (LSP) kann den Topographiezustand durch die statischen Bilder mittels einer Kalibrierung in einem Messbereich bewerten. Als Beispiel der Unterschiede in der Grauwertverteilung können Differenzen der Pulververteilung festgestellt werden. Eine optische Kontrolle des Pulverauftrages kann zusätzlich separat erfolgen. Die Bilder der Pulverschicht könnten dann genutzt werden, um z.B. eventuell vorhandene streifenförmige Spuren im Pulver, Abnutzungen und Beschädigungen des Beschichters (Rakel) zu erkennen. Dies könnte zeitlich und örtlich hoch aufgelöst realisiert werden.

Wesentliche Parameter für die Bewertung der Oberflächentopographie bzw. Oberflächenrauheit aus den statischen Aufnahmen der LSP können anhand der Speckle-Größe, der statistischen Auswertung der Grauwertverteilung (Entropie des Histogramms der Aufnahme) oder durch den Bildverarbeitungsalgorithmus der Grauwertübergangsmatrix ermittelt werden. Die ermittelten Parameter können dann beispielsweise auch mit Referenzwerten verglichen werden.

Die Speckle-Größe wird durch die Halbwertsbreite der normierten Autokorrelationsfunktion (Gleichung 1) berechnet. Sie ist definiert durch die Intensität des in der Erfassungsebene beobachteten Speckle-Musters.

$$Corr = \sum \sqrt{\frac{I_{x,y} - (I_{(x,y-\tau)})^2}{N*M}} \qquad (1)$$

Hierbei bedeuten:

$Corr$ - Korrelation
$I$ - Intensität eines Pixels
$x,y$ - x- bzw. y-Werte aller Pixel
$\tau$ - Zeitverschiebung
$N, M$ - Anzahl der Pixelspalten bzw. -zeilen des Speckle-Bildes

Die Autokorrelationsfunktion eines Signals ist die Fourier-Transformation der Leistungsdichte des Signals. Dieser Umstand wird auch als Wiener-Khinchin-Theorem bezeichnet. Damit können das Leistungsspektrum des Speckle-Bilds und das umgekehrte (inverse) Leistungsspektrum berechnet werden, um im Anschluss die Autokorrelation zu erhalten.

Die Entropie des Histogramms einer statischen Abbildung nach Gleichung (2) wird wie folgt ausgewertet:

$$E = -\sum_{i=g_{min}}^{g_{max}} h(i) \cdot \log_2 h(i), \qquad (2)$$

wobei h(i) die Häufigkeit und g der Grauwert ist.

Die Auswertung der Grauwertübergangsmatrix (gray level co-occurrence matrix - GLCM) basiert auf der Bildverarbeitungsmethode zur Texturanalyse. Typische Kenngrößen dieser Auswertung sind:

Energie:

$$E_s = \sum_{i,j=0}^{Q-1} C^2(i,j) \text{ mit } 0 < E_s \leq 1 \qquad (3)$$

Homogenität:

$$H = \sum_{i,j=0}^{Q-1} \frac{1}{1+(i-j)^2} C(i,j) \text{ mit } 1 \leq H \leq \frac{1}{1+(Q-1)^2} \qquad (4)$$

Kontrast:

$$CO\_C = \sum_{i,j=0}^{Q-1} (i-j)^2 C(i,j) \text{ mit } 0 \leq C \leq (Q-1)^2 \qquad (5)$$

Korrelation:

$$R = \frac{1}{\sigma_m \sigma_n} \left( \sum_{i,j=0}^{Q-1} ijC(i,j) - \mu_m \mu_n \right) \text{ mit } -1 \leq R \leq 1 \qquad (6)$$

mit dem Eintrag/Wert der GLCM C(i,j) an der Stelle i und j und Breite von GLCM Q.

Zur Bewertung der Porosität wird die Differenz-Korrelationsfunktion (DKF) verwendet. Dieser dynamische Parameter basiert auf der Auswertung der Grauwertverteilung mit zeitabhängigen Grauwertänderungen eines einzelnen Pixels. Er ist definiert als:

$$DKF = \frac{\sum_i \sum_j (A_{ij} - \bar{A})(B_{ij} - \bar{B})}{\sqrt{(\sum_i \sum_j (A_{ij} - \bar{A})^2)(\sum_i \sum_j (B_{ij} - \bar{B})^2)}}$$

wobei:

A und B -     Intensitäten zweier aufeinanderfolgender Speckle-Bilder des gleichen Oberflächen ausschnitts,
$\bar{A}$ und $\bar{B}$ -     Durchschnittswerte der Intensitäten aller Pixel im Bild A bzw. B und
i und j -     Position des Pixels im Bild

darstellen. Bei dieser Auswertung wurde A als die Intensität des ersten Bildes einer dynamischen Messung verwendet.

Bei dieser Auswertung wird davon ausgegangen, dass die thermo-mechanischen Eigenschaften von Materialien durch die optische Aufnahme der dynamischen Speckle-Muster, die durch eine gezielte thermische Ausdehnung hervorrufen wurden, charakterisiert werden. Im Fall der additiven Fertigung erfolgt die lokale Erwärmung aus dem Herstellungsprozess. Aus diesem Grund kann die LSP-Technik inline den erwärmten Bereich detektieren und die Dehnungsänderungen lokal bewerten. Als Ergebnis dieser Analyse können Tendenzen der Korrelationsfunktionswerte betrachtet werden.

So weist z.B. eine lokal erwärmte Oberfläche über einem Defekt trotz gleicher optischer Absorptionseigenschaften und Oberflächentopologie, begleitet von einer geringeren relativen Dichte der jeweiligen Oberflächenbereiche, eine höhere Temperatur auf als eine defektfreie Oberfläche. Dieses Verhalten basiert auf einer verminderten Wärmeleitfähigkeit innerhalb der Hohlräume. Sowohl die Grenzschicht als auch die Defekte führen zu einem Wärmestau und sind als Isolationsschicht zu betrachten. Infolge der erhöhten Temperatur dehnt sich das Material aus, insbesondere im Bereich der behandelten Oberfläche. Die Streupunkte, die das Speckle-Muster erzeugen, verschieben sich und als Ergebnis wird die Bewegung und Veränderung der Speckle sichtbar. Dies führt zur Steigung der detektierten DKF-Kurve.

Eine weitere Anwendung des LSP-Verfahrens ist die Detektion von Inhomogenitäten anhand der DKF. Dabei handelt es sich um die Aufschlüsselung eines Zeitsignals der lokalen Temperatur bzw. die Defektdetektion mittels der einzelnen Werte der DKF. Die Darstellung des diskreten physikalischen Signals durch Zeit und Raum, wie im Fall der LSP die schnelle zeitliche Abfolge der Bilder bzw. Videoaufnahme (bis 4 kHz), ist der Darstellung durch DKF äquivalent.

Während des Bauprozesses wird Pulver unter der Einwirkung der Laserstrahlung vollständig aufgeschmolzen und bildet nach der raschen Erstarrung eine feste Verbindung mit der darunterliegenden Materialschicht. Dieser Vorgang wiederholt sich, bis schichtweise das gesamte Bauteil hergestellt ist. Der Verfestigungsmechanismus der Schmelze wird im Wesentlichen von der Oberflächenspannung, Viskosität, Benetzung, Evaporation, Oxidation und thermo-kapillaren Effekten beeinflusst. Die prozesstypischen hohen Abkühlraten bei diesem Prozess sind insofern problematisch, da sich insbesondere bei metallischem Material, je nach Legierungssystem und Prozessstrategie, hohe Eigenspannungen, Heißrisse, Gaseinschlüsse und Bauteilverformungen ausprägen können. Aus diesem Grund kann die Inline-Vermessung der Wärmezone während des Bauprozesses zur Entwicklung eines wesentlichen Parameters zur Einstellung von Eigenspannung, Bauteilverformung und Bildung von Gaseinschlüssen angewendet werden.

Die Speckle-Muster detektieren die örtlichen Ausdehnungen des Materials im Bereich des Schmelzbads. Dort zeigen die Speckle-Muster eine charakteristische Speckle-Dynamik, die sich von der im erstarrten Material unterscheidet. Die Auszählung der von der Wärmeausdehnung beeinflussten Pixel in der Speckle-Aufnahme wird demzufolge mit der Größe der Wärmezone korrelieren. Und diese wiederum korreliert mit dem Energieeintrag des Schweißlasers sowie den Eigenschaften der Schmelze. Es wird jeweils an der Position des Laserstrahls, also am Auftreffort des Laserstrahls auf die Oberfläche, die Fläche des Ausdehnungsbereichs bewertet, indem die Pixelanzahl der Wärmezone bestimmt wird. Die Pixelanzahl kann in metrische Einheiten konvertiert werden.

Unter der Verwendung des Algorithmus der DKF können zusätzlich die Wärmeleitung und das Absorptionsverhalten der Materialoberfläche in der Wärmezone beurteilt werden. Dafür kann die DKF lokal für bestimmte Wärmezonen relativ zum Auftreffort des Bearbeitungslaserstrahls berechnet werden. Eine spezielle Software wertet lokal und bildlich bzw. tabellarisch aus. Die Software kennt oder erkennt dabei die Position des Laserstrahls in den Bildern und ermittelt die für die Bewertung der Oberflächenzustands relevanten Parameter automatisch.

Die Geschwindigkeit der Algorithmen erlaubt inline-fähiges Messen. Daraus ergibt sich die Möglichkeit, unmittelbar nach dem örtlichen Aufschmelzen durch den Laserspot eine Regelung basierend auf den Auswerteergebnissen anzuschließen. Diese ist in der Lage, vor dem vollständigen Erstarren der Schmelze Fehler zu beheben oder bei der laufenden Strahlführung anzupassen. Das hier vorgestellte Verfahren ist somit dazu geeignet, bei pulverbettbasierten additiven Fertigungsverfahren auf die Bauteilgeometrie und das sich ändernde thermische Verhalten im Strahlengang Geometrie-angepasst zu reagieren.

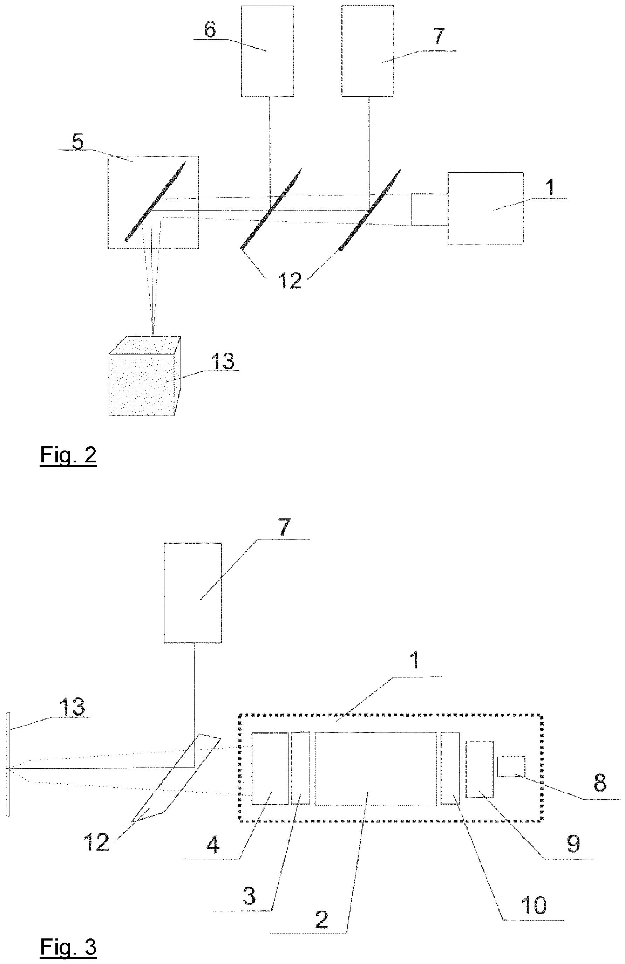

Figur 2 zeigt schematisch ein Beispiel für eine Laserbearbeitungsanlage, in der die vorgeschlagene Vorrichtung, im Folgenden auch als LSP-Messsystem 1 bezeichnet, integriert ist. Die Laserbearbeitungsanlage weist einen Bearbeitungslaser 6 auf, dessen Laserstrahl mittels eines Scanners 5 in dieser Darstellung über die zu bearbeitende Oberfläche eines Bauteils 13 geführt wird. Über einen Beleuchtungslaser, auch als LSP-Laser 7 bezeichnet, wird in diesem Beispiel die Oberfläche zusätzlich beleuchtet, um aus der reflektierten und/oder gestreuten Strahlung des LSP-Lasers 7 mit dem LSP-Messsystem zur 1 Speckle-Photometrie geeignete Bilder von der Oberfläche aufzunehmen. Die Einkopplung des Beleuchtungslaserstrahls und die Aufnahme der Bilder mit dem LSP-Messsystem 1 erfolgen dabei über die halbdurchlässigen Spiegel 12 jeweils koaxial zum Bearbeitungslaserstrahl.

Ein Ausgestaltungsbeispiel des LSP-Messsystems 1 ist in Figur 3 schematisch dargestellt. Das Messsystem 1 besitzt im vorliegenden Beispiel neben einem hochauflösenden Bildwandler (CMOS/CCD) 2 mit vorgeschaltetem optischen Filter 3 und Linse/Objektiv 4 einen (nicht dargestellten) energieeffizienten Chipsatz/Elektronik zur Steuerung des Mess-Regimes sowie zur sensornahen Bildverarbeitung. Das in der Figur dargestellte Modul weist außerdem eine oder mehrere geeignete Schnittstellen 8 sowie eine Stromversorgungseinheit 9 und eine Auswerteeinheit 10 auf, die vorzugsweise eine GPU für die Berechnungen umfasst. In der Figur ist zusätzlich der optionale Beleuchtungslaser 7, bspw. eine Laserdiode, dargestellt, der zusätzlich zum oder anstelle des Bearbeitungslasers 6 für die Anregung der Speckle-Muster genutzt werden kann.

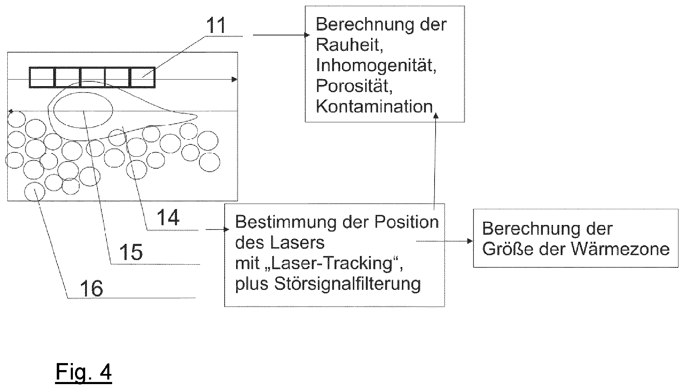

Bei einem pulverbettbasierten Bauprozess erwärmt der Bearbeitungslaserstahl das Pulver anhand der durch die AM-Anlage (AM: Additive Manufacturing) vorgegebenen Scanreihenfolge. Bei koaxialer Erfassung durch das LSP-Messsystem 1, wie bspw. in Figur 2, werden der oder die Auswertebereiche 11 durch die Software der vorgeschlagenen Vorrichtung relativ zum Auftreffort des Laserstrahls in den Bildern festgelegt. Die Figur 4 beschreibt das Vorgehen anhand eines dargestellten Bildes, in dem schematisch der Auftreffort des Laserstrahls in Form des Laserspots 15, das Schmelzbad 14, Pulverpartikel 16 sowie die Auswertebereiche 11 angedeutet sind. Die Scanrichtung ist mit dem nach links gerichteten Pfeil ebenfalls angedeutet. Störungen, wie z.B. Funkenflug und Schmelzperlenbildung, werden durch eine speziell dafür entwickelte Filterung gelöscht, um den Einfluss der Störsignale zu reduzieren. Diese Vorgehensweise ermöglicht es auch, ein zusammengesetztes Bild der Wärmezoneneigenschaften der gesamten Schicht bzw. Lage zu erstellen und auszuwerten.

Bei der Auswertung werden z.B. für die Bestimmung des Porositätszustands anhand der DKF die Auswertebereiche 11 so entweder punktweise festgelegt oder über das Bild gescannt, dass sie lokal in der Nähe der Wärmezone des frisch geschmolzenen Materials liegen. Die Bestimmung der Topographiebeschaffenheit kann z.B. lokal oder über die ganze Lage erfolgen. Die Berechnung der Fläche der Wärmezone wird kontinuierlich um den Bearbeitungslaserstrahl bzw. Laserspot 14 herum ausgeführt. Die Bestimmung der Porosität, von Inhomogenitäten und Kontaminationen erfolgt in diesem Beispiel in den dargestellten rechteckigen Auswertebereichen 11. Die Berechnungen werden mit den oben angeführten Algorithmen durchgeführt und die Korrelationen zu Werkstoffzustand, Rauheit, Inhomogenität, Porosität, Kontamination oder der Größe der Wärmezone aufgestellt.

Im Falle einer nicht koaxialen Erfassung der Bilder wird das bereits oben angeführte Laserstrahl-Tracking durchgeführt, um die Position des Laserspots 14 im Speckle-Muster zu detektieren. Dazu wird die Laser- bzw. Wärmezonenposition anhand des Vorhandenseins der Speckle-Dynamik im Speckle-Muster erkannt. Die Positionen der Auswertebereiche 11 werden dann relativ zur detektierten Position des Laserspots 14 wie bei der Beschreibung der Figur 4 gewählt.

Bezugszeichenliste

1 LSP-Messsystem
2 Kamera
3 Filter
4 Linse/Objektiv
5 Scanner
6 Bearbeitungslaser
7 LSP-Laser
8 Schnittstelle
9 Stromversorgungseinheit
10 Auswerteeinheit / GPU
11 Abschnitt bzw. Auswertebereich im Bild
12 teildurchlässiger Spiegel
13 Bauteil
14 Schmelzbad
15 Laserspot
16 Pulver

**Patentansprüche**

1. Verfahren zur Überwachung eines Laserbearbeitungsprozesses, insbesondere zur pulverbettbasierten additiven Fertigung, bei dem wenigstens ein Bearbeitungslaserstrahl entlang einer oder mehrerer Bahnen über eine zu bearbeitende Oberfläche geführt wird, um die Oberfläche jeweils lokal unter Bildung eines Schmelzbades (14) aufzuschmelzen,
wobei bei dem Verfahren während des Bearbeitungsprozesses

   - von der Oberfläche reflektierte und/oder gestreute Strahlung des Bearbeitungslaserstrahls oder eines zusätzlich zur Beleuchtung der Oberfläche eingesetzten Lasers (7) mit einer Hochgeschwindigkeits-Kamera (2) orts- und zeitaufgelöst erfasst wird, um für Laser-Speckle-Photometrie geeignete zeit- und ortsaufgelöste Bilder zu erhalten, und
   - aus den Bildern mittels Auswerteverfahren der statischen und zeitaufgelösten Laser-Speckle-Photometrie automatisiert wenigstens
   -- eine Topographie oder Rauheit der Oberfläche in einem oder mehreren Abschnitten im Bereich eines Auftreffortes (15) des Bearbeitungslaserstrahls auf der Oberfläche,
   -- eine Größe des jeweiligen Schmelzbades (14) und
   -- eine Porosität an oder unterhalb der Oberfläche in einem oder mehreren Abschnitten im Bereich des Auftreffortes (15) des Bearbeitungslaserstrahls auf der Oberfläche als Zustandsgrößen bestimmt werden.

2. Verfahren nach Anspruch 1,
**dadurch gekennzeichnet,**
**dass** die Erfassung der reflektierten und/oder gestreuten Strahlung mit der Kamera (2) koaxial zum Bearbeitungslaserstrahl erfolgt.

3. Verfahren nach Anspruch 2,
**dadurch gekennzeichnet,**
**dass** der Bearbeitungslaserstrahl mittels eines oder mehrerer Scannerspiegel über die zu bearbeitende Oberfläche geführt wird und die Erfassung der reflektierten und/oder gestreuten Strahlung mit der Kamera (2) ebenfalls über diese Scannerspiegel erfolgt.

4. Verfahren nach Anspruch 1,
**dadurch gekennzeichnet,**
**dass** der Auftreffort (15) des Bearbeitungslaserstrahls auf der Oberfläche in den Bildern über einen Tracking-Algorithmus bestimmt wird.

5. Verfahren nach einem der Ansprüche 1 bis 4, **dadurch gekennzeichnet,**
**dass** die Topographie oder Rauheit der Oberfläche über eine Grauwertverteilung in den jeweiligen Bildern bestimmt wird.

6. Verfahren nach einem der Ansprüche 1 bis 5, **dadurch gekennzeichnet,**
**dass** die Porosität an oder unterhalb der Oberfläche über eine Differenz-Korrelationsfunktion jeweils zeitlich aufeinanderfolgender Bilder bestimmt wird.

7. Verfahren nach Anspruch 6,
**dadurch gekennzeichnet,**
**dass** anhand der Differenz-Korrelationsfunktion auch Inhomogenitäten an oder unterhalb der Oberfläche als weitere Zustandsgröße ermittelt werden.

8. Verfahren nach einem der Ansprüche 1 bis 7, **dadurch gekennzeichnet,**
**dass** die Größe des jeweiligen Schmelzbades (14) über eine Auszählung von durch Wärmeausdehnung an der Oberfläche beeinflusster Pixel in den jeweiligen Bildern bestimmt wird.

9. Verfahren nach einem der Ansprüche 1 bis 8, **dadurch gekennzeichnet,**
**dass** vor der Kamera (2) ein Filter (3) mit einer Durchlassbandbreite von $\leq$ 5nm eingesetzt wird.

10. Verfahren nach einem der Ansprüche 1 bis 9, **dadurch gekennzeichnet,**
**dass** die Bilder mit der Kamera (2) mit einer Frame-Rate von >2000 Frames/s aufgezeichnet werden.

**11.** Verfahren nach einem der Ansprüche 1 bis 10, **dadurch gekennzeichnet,**
**dass** als Kamera (2) eine Kamera eingesetzt wird, die Aufnahmefrequenzen bis 32kHz ermöglicht.

**12.** Verfahren nach einem der Ansprüche 1 bis 11, **dadurch gekennzeichnet,**
**dass** der Laserbearbeitungsprozess anhand einer oder mehrerer der Zustandsgrößen geregelt wird.

**13.** Vorrichtung zur Überwachung eines Laserbearbeitungsprozesses, insbesondere zur pulverbettbasierten additiven Fertigung, bei dem eine Bearbeitungseinrichtung wenigstens einen Bearbeitungslaserstrahl entlang einer oder mehrerer Bahnen über eine zu bearbeitende Oberfläche führt, um die Oberfläche jeweils lokal unter Bildung eines Schmelzbades (14) aufzuschmelzen,
wobei die Vorrichtung wenigstens

- eine Hochgeschwindigkeits-Kamera (2), mit der während des Bearbeitungsprozesses von der Oberfläche reflektierte und/oder gestreute Strahlung des Bearbeitungslaserstrahls oder eines zusätzlich zur Beleuchtung der Oberfläche eingesetzten Lasers (7) orts- und zeitaufgelöst erfasst wird, um für Laser-Speckle-Photometrie geeignete zeit- und ortsaufgelöste Bilder zu erhalten, und
- eine mit der Kamera (2) verbundene Auswerteeinrichtung (10) aufweist, mit der aus den Bildern mittels Auswerteverfahren der statischen und zeitaufgelösten Speckle-Photometrie automatisiert wenigstens
--- eine Topographie oder Rauheit der Oberfläche in einem oder mehreren Abschnitten im Bereich eines Auftreffortes des Bearbeitungslaserstrahls auf der Oberfläche,
--- eine Größe des jeweiligen Schmelzbades und
--- eine Porosität an oder unterhalb der Oberfläche in einem oder mehreren Abschnitten im Bereich des Auftreffortes des Bearbeitungslaserstrahls auf der Oberfläche als Zustandsgrößen bestimmt werden, und

wobei die Kamera (2) so in die Bearbeitungseinrichtung für den Laserbearbeitungsprozess integriert ist, dass sie die von der Oberfläche reflektierte und/oder gestreute Strahlung koaxial zum Bearbeitungslaserstrahl erfasst.

**14.** Vorrichtung nach Anspruch 13,
**dadurch gekennzeichnet,**
**dass** die Kamera (2) Aufnahmefrequenzen bis 32kHz ermöglicht.

Fig. 1

Fig. 2

Fig. 3

11 → Berechnung der
Rauheit,
Inhomogenität,
Porosität,
Kontamination

14

15

16

Bestimmung der Position
des Lasers
mit „Laser-Tracking",
plus Störsignalfilterung

Berechnung der
Größe der Wärmezone

## Fig. 4

Europäisches Patentamt
European Patent Office
Office européen des brevets

**EUROPÄISCHER RECHERCHENBERICHT**

Nummer der Anmeldung

**EP 21 20 5186**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | US 2020/110025 A1 (YACOUBIAN ARAZ [US]) 9. April 2020 (2020-04-09) * Absatz [0053] – Absatz [0127]; Ansprüche * ----- | 1-14 | INV. B22F10/28 B22F10/38 B22F12/90 B23K26/03 |
| Y | B. BENDJUS ET AL: "P7.8 – Laser-Speckle-Photometrie – optische Sensorik zur Zustands- und Prozessüberwachung", DRESDNER SENSOR-SYMPOSIUM 2015, 9. Dezember 2015 (2015-12-09), Seiten 245-250, XP055566272, DOI: 10.5162/12dss2015/P7.8 ISBN: 978-3-9813484-9-1 * Seite 248, rechte Spalte, Zeile 19 – Seite 249, linke Spalte * ----- | 1-14 | B23K26/342 B33Y10/00 B33Y30/00 B33Y50/02 B22F10/80 G01N21/01 |
| A | MARCO GRASSO ET AL: "Process defects andmonitoring methods in metal powder bed fusion: a review", MEASUREMENT SCIENCE AND TECHNOLOGY, IOP, BRISTOL, GB, Bd. 28, Nr. 4, 15. Februar 2017 (2017-02-15), Seite 44005, XP020314811, ISSN: 0957-0233, DOI: 10.1088/1361-6501/AA5C4F [gefunden am 2017-02-15] * das ganze Dokument * ----- | 1-14 | |
| A | CN 107 655 831 B (UNIV HUAZHONG SCIENCE TECH) 25. September 2018 (2018-09-25) * das ganze Dokument * ----- | 1-14 | |

**RECHERCHIERTE SACHGEBIETE (IPC)**

B22F
B23K
B33Y
G01N

Der vorliegende Recherchenbericht wurde für alle Patentansprüche erstellt

| Recherchenort | Abschlußdatum der Recherche | Prüfer |
|---|---|---|
| Den Haag | 14. April 2022 | Morra, Valentina |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

EP 21 20 5186

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-04-2022

| Im Recherchenbericht angeführtes Patentdokument | Datum der Veröffentlichung | Mitglied(er) der Patentfamilie | Datum der Veröffentlichung |
|---|---|---|---|
| US 2020110025 A1 | 09-04-2020 | KEINE | |
| CN 107655831 B | 25-09-2018 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090206065 A1
- EP 2598313 B1
- DE 102014212246 B3
- EP 1693141 B1
- US 9527240 B2
- US 2020110025 A1